# EUROPÄISCHE PATENTSCHRIFT

(11) **EP 2 792 464 B1**
(45) Veröffentlichungstag und Bekanntmachung des Hinweises auf die Patenterteilung: **29.03.2017**
(21) Anmeldenummer: 14000678.4
(22) Anmeldetag: 26.02.2014
(51) Int. Cl.: B29C 44/12, H02G 3/04, H02G 9/06

(54) **Verfahren zur Herstellung von Kabelschächten**
Process for producing cable ducts
Procédé pour la production des gaines de câbles

(30) Priorität: 19.04.2013 DE 102013006818
(43) Veröffentlichungstag der Anmeldung: 22.10.2014
(73) Patentinhaber: Langmatz GmbH, 82467 Garmisch-Partenkirchen (DE)
(72) Erfinder: Lohr, Josef, 82496 Oberau (DE); Emert, Anton, 82496 Oberau (DE); Bauer, Hubert, 82467 Garmisch-Partenkirchen (DE); Ostendorf, Jürgen, 82467 Garmisch-Partenkirchen (DE)
(74) Vertreter: Flosdorff, Jürgen

(56) Entgegenhaltungen:
- US-A- 5 997 784
- US-A1- 2003 021 915
- US-A1- 2006 099 405
- US-A1- 2008 128 933
- US-A1- 2012 077 890

## Beschreibung

Die Erfindung betrifft ein Verfahren zur Herstellung eines kabelschachtes im Spritzgießverfahren, die in das Erdreich eingebaut werden, wobei die Materialien dafür zu einem bedeutenden Teil aus nachwachsenden Rohstoffen bestehen. Derartige Materialien sind unter der Bezeichnung WPC (wood plastic composite) bekannt, wobei es sich um holzfaserverstärkte Kunststoffe handelt.

Seit längerem wird WPC beispielsweise für Terrassenböden und Fassadenelemente verwendet, die in einem Extrusionsverfahren hergestellt werden. Das bisher bekannte WPC ist zum Spritzgießen von großen und komplexen Bauteilen jedoch nicht geeignet.

Die US 2003/021915 A1 offenbart ein Verbundmaterial mit einem Polymer, einem chemischen Treibmittel, das 20 % exotherm und 80 % endotherm ist, und Zellulosefasern aus getrocknetem Pinienholz. Hieraus werden Pellets hergestellt, die im Spritzgussverfahren zu geschäumten Produkten für die Bauindustrie geformt werden. Als Feuchtigkeitsgehalt des Zellulosematerials sind 4 bis 10 % angegeben, womit aus diesem Verbundmaterial keine Kabelschächte im Spritzgussverfahren herstellbar sind, da mit dem geschäumten Material das zugehörige Formnest eines Kabelschachtes nicht vollständig und homogen ausfüllbar ist.

Die US 2012/0077890 A1 offenbart ein Verbundmaterial, das eine homogene Mischung aus Teppichresten und natürlichen Fasern enthält. Die Verwendung von Teppichresten und Holzmehl wird auch für Verbundmaterialien in der US 2008/0128933 A1 vorgeschlagen.

Die US 5,997,784 offenbart die Verwendung von Verbundmaterialien mit Holzfasern zur Verarbeitung im Spritzgussverfahren, wobei es um verbesserte Oberflächeneigenschaften der Produkte mit niedriger Dichte geht.

Der vorliegenden Erfindung liegt die Aufgabe zugrunde, ein Verfahren zur Herstellung von Kabelschächten bereitzustellen, das möglichst Schonend ist und einer Holzfaserschädigung entgegen wirkt. Dabei ist es unerläßlich, dass das Material, das nach seinem Einbau in den Boden mit dem Erdreich in Berührung steht, nicht verfällt, so dass verhindert ist, dass der Holzanteil während der langen Nutzungsdauer des Schachtes verfault. Außerdem muss das Material dem Kabelschacht eine hohe Festigkeit verleihen, damit er allen einwirkenden Kräften zuverlässig Stand hält.

Diese Aufgabe wird erfindungsgemäß durch die Merkmale der unabhängigen Patentansprüche gelöst.

Vorteilhafte Ausgestaltungen des verwendeten WPC sind in den abhängigen Ansprüchen gekennzeichnet.

Das erfindungsgemäß vorgesehene Treibmittel wird nicht nur zur Verringerung der Materialdichte und damit des Bauteilgewichts eingesetzt, sondern der durch das Treibmittel entstehende Innendruck unterstützt zusätzlich die Werkzeugfüllung während des Spritzgussvorgangs. Die Erfindung sieht dabei vor, dass ein endothermes chemisches Treibmittel, bevorzugt ein Treibmittelmasterbatch auf Basis von Natriumbicarbonat, eingearbeitet in ein geeignetes Polymerträgermaterial, eingesetzt wird, das eine hohe Temperatureinwirkung vermeidet, was zu einer Zerstörung der Holzfasern führen würde.

Die geringsten Dichten werden bei dem erfindungsgemäßen Material durch drei endotherme Treibmittel erreicht, nämlich durch Expancel 951 MB 120, LUVOPOR 9537 der Firma Lehmann Voss & Co. und Zebra-Chem, Zebra-Cell A 015K. Der optimale Treibmittelanteil für den Einsatz beim Spritzgussverfahren mit geschäumtem Thermoplastmaterial liegt zwischen 1 und 2 Gew.-%.

Für die Herstellung des Holzfaser-verstärkten Kunststoffes sind grundsätzlich alle thermoplastischen Kunststoffe mit einer Verarbeitungstemperatur unter 200°C geeignet. Es werden Polyolefine, die sich besonders gut mit den Holzfasern verbinden lassen, eingesetzt. Insbesondere Polypropylen (PP) hat sehr gute Eigenschaften für diesen Einsatzbereich.

Bei der Naturfaserverstärkung des Kunststoffs handelt es sich vorzugsweise um Holzfasern aus Weichhölzern mit Faserlängen zwischen 75 µm und 100 µm. Ein Holzanteil von etwa 30 Gew.-% ist aus ökonomischer Sicht nicht sinnvoll und bringt unzureichende Biegeeigenschaften des fertigen Bauteils mit sich. Rezepturen mit über 60 Gew.-% Holzanteilen haben sich als schwer verarbeitbar erwiesen. Dagegen zeigen Rezepturen mit 40 Gew.-% Holzanteil gute Verarbeitungseigenschaften und eine hohe Schlagzähigkeit des fertigen Produkts auf. Rezepturen mit 50 bis 60 Gew.-% Holzanteil sind aus ökonomischer Sicht vorteilhaft und zeichnen sich durch gute Biegeeigenschaften und geringe Durchbiegung des fertigen Gegenstandes aus. Als Holzanteil werden von 40 bis 60 Gew.-% eingesetzt.

Die Herstellung des erfindungsgemäßen WPC-Schaums verläuft grundsätzlich in zwei Schritten. Um das Holz zusammen mit den Additiven in die Polymermatrix einzuarbeiten, wird im ersten Schritt das WPC-Compound auf einer Compoundier-Maschine hergestellt. Im zweiten Schrift wird das Compound durch Zugabe von Treibmitteln aufgeschäumt und damit in die endgültige Konsistenz gebracht.

Um eine reibungslose Verarbeitbarkeit für die Spritzgußschritte zu gewährleisten, wird zunächst ein homogenes Granulat hergestellt. In dem oben erwähnten Compounder wird die thermoplastische Polymermatrix zusammen mit den verschiedenen Additiven wie Haftvermittler, vorwiegend Maleinsäureanhydrid (MSA), Stabilisatoren, wobei hier vorwiegend Antioxidantien zum Einsatz kommen, und den Holzfasern gemischt. Durch einen Granulierungsschritt wird am Ende das eigentliche Compound fertiggestellt, das im Anschluss problemlos bei den nachfolgenden Lager-, Förder- und Spritzgussverfahren verwendet werden kann.

Für eine möglichst schonende Compoundierung wird der Einsatz eines Doppelschneckenextruders mit einer möglichst späten Zuführung der Holzfasern vorgeschlagen, da so einer möglichen Faserschädigung entgegen gewirkt wird.

Da nach der Herstellung des Compounds eine Wasseraufnahme nicht auszuschließen ist, erfolgt bei dem erfindungsgemäßen Verfahren vor dem Spritzguss ein Trocknungsvorgang. Dabei wird ein schonender Trocknungsvorgang bei einer Temperatur um 80°C, maximal 110 °C mit einer Verweilzeit von ca. 2 bis 6 Stunden empfohlen. Für das Spritzgussverfahren wird eine Zylindertemperatur der Spritzgussmaschine zwischen 150°C und 190°C vorgeschlagen. Die Werkzeugstemperatur sollte auf etwa 40°C eingestellt sein. In Abhängigkeit vom Holzgehalt betrug bei erfolgreichen Tests die Zykluszeit zwischen 57 s und 72 s. Die Verarbeitungstemperatur sollte auf alle Fälle unter 200 °C liegen, damit keine thermische Zerstörung der Holzfasern erfolgt.

Nachfolgend wird ein erfindungsgemäßes Beispiel eines Herstellungsprozesses beschrieben.

Zur Herstellung von WPC-Compound werden Doppelschneckenextruder mit Entgasung eingesetzt.

Bei der Compoundierung werden sämtliche erforderlichen Additive getrennt über eigene Dosierungen am Extruder zugeführt. Ist dies ausstattungsabhängig nicht darstellbar, muss bereits zuvor eine entsprechende prozentuale Mischung hergestellt werden. Die entsprechende Vormischung kann dann zusammen mit dem Polymermatrixmaterial über den Haupteinzug dem Extruder zugegeben werden.

Zur Schonung der Holzfasern empfiehlt es sich, diese erst später über eine Dosierung an der Seitenfütterung am Extruder dem bereits aufgeschmolzenen Polymer zuzugeben. Polymere und Additive lassen sich in der Regel problemlos dosieren, doch die Holzfasern neigen stark zur Brückenbildung, weshalb sogenannte Agitationssysteme zum Schütteln oder Rühren des Holzes benötigt werden. Der Feuchtanteil der Holzfasern, der vor der Verarbeitung mit einer geeigneten Messmethode bestimmt werden muss, wird durch eine entsprechend höhere Dosierung kompensiert, um den erforderlichen Holzanteil im WPC-Compound sicher zu stellen. Zur eigentlichen Granulierung kann eine Unterwassergranulierung eingesetzt werden; es eignen sich aber auch die Stranggranulierung und ähnliche Verfahren.

Das compoundierte WPC-Rohmaterial kann problemlos in Behältern gelagert werden.

Aufgrund einer möglichen Feuchteaufnahme des Compound muss der eigentlichen Spritzgussverarbeitung ein Trockenschritt (Trockenlufttrockner) vorangehen. Eine ausreichende Trocknung auf eine Restfeuchte < 0,5% verbessert die weiteren Verarbeitungsprozesse. Je nach ermittelter Ausgangsfeuchte des Granulates liegt die Trocknungstemperatur zwischen 80 - 110 C° und 2 bis 6 Stunden.

Nach erfolgter Trocknung wird das WPC-Compound an die Dosierstation der Spritzgussmaschine gefördert. Je nach Rezeptur erfolgt nun jeweils eine gravimetrische Dosierung des WPC-Compund, des Farbmasterbatch und des chemischen Treibmittelmasterbatch in die Schnecke der Spritzgussmaschine, wo die Homogenisierung und Aufschmelzung des Materialgemisches erfolgt. Nach Erreichen der erforderlichen Massetemperatur von ca. 190°C und einer ausreichenden Dosierung erfolgt die eigentliche Formgebung durch den Spritzgießvorgang. Die Verabreichung erfolgt im sogenannten TSG-Schaumgussverfahren, was ein Zusammenwirken des Einspritzvorgangs mit der Treibmittelexpansion beinhaltet und so zu einem homogen gefüllten Spritzgussteil, auch bei großen Dimensionen, führt.

Mit dem erfindungsgemäßen Verfahren lassen sich Kabelschächte mit hoher Festigkeit herstellen, wobei das Material auch in ständiger Berührung mit feuchtem Erdreich nicht verfallen kann. Die fertigen Produkte sind ökologisch hervorragend, da sie zum großen Teil aus nachwachsendem Rohstoff bestehen, wobei der nachwachsende Rohstoff ein regionales. Produkt sein sollte. Die fertigen Produkte sind auch ökonomisch vorteilhaft.

## Patentansprüche

1. Verfahren zur Herstellung eines Kabelschachtes,
mit folgenden Schritten:
a) Herstellen eines homogenen Granulats eines WPC durch Mischen eines Kunststoffs aus der Gruppe der Polyolefine und eines Haftvermittlers mit Holzfasern mit einer Faserlänge von 75-300 µm in einer Compoundiermaschine, wobei der Holzfaseranteil des WPC 40 bis 60 Gew.-% beträgt;
b) Trocknen des Granulats;
c) Dosieren des Granulats und 1 bis 2 Gew.-% eines endotherm reagierenden chemischen Treibmittels in die Schnecke einer Spritzgussmaschine zum Homogenisieren und Aufschmelzen des Materialgemischs:
d) Verabreichen des Materialgemisches in eine Spritzgussform im TSG-Schaumgussverfahren, bei dem der Einspritzvorgang und die Treibmittelexpansion zusammen wirken.

## Claims

1. Method for producing a cable shaft, comprising the following steps:
a) producing homogenous WPC pellets by mixing a plastics material from the group of polyolefins and an adhesion promoter comprising wood fibres having a fibre length of from 75-300 µm in a compounder, wherein the wood fibre content of the WPC is 40 to 60 wt.%;
b) drying the pellets;
c) metering the pellets and 1 to 2 wt.% of an endothermal-reacting chemical foaming agent into the screw of an injection moulding machine in order to homogenise and melt the material mixture;
d) injecting the material mixture into an injection mould in the thermoplastic foam casting method, in which the injection process and the expansion of the foaming agent work together.

## Revendications

1. Procédé pour la production d'un puits de câbles, avec les étapes suivantes :
a) la production d'un granulat homogène d'un WPC par mélange d'une matière plastique du groupe des polyoléfines et d'un agent adhésif avec des fibres de bois avec une longueur de fibre de 75 à 300 µm dans une machine de mélangeage, dans lequel la proportion de fibres de bois du WPC est de 40 à 60 % en poids ;
b) le séchage du granulat ;
c) le dosage du granulat et de 1 à 2 % en poids d'un agent d'expansion chimique réagissant de façon endothermique dans la vis sans fin d'une machine de moulage par injection pour l'homogénéisation et la fusion du mélange de matériau ;
d) l'administration du mélange de matériau dans un moule à injection dans le procédé de moussage TSG, dans lequel le processus d'injection et l'expansion de l'agent d'expansion interagissent.
